# EUROPEAN PATENT APPLICATION

(11) **EP 2 502 890 A1**
(43) Date of publication of application: **26.09.2012**
(21) Application number: 12397509.6
(22) Date of filing: 19.03.2012
(51) Int. Cl.: C04B 28/00, C04B 28/08, C04B 28/26

(54) **An alkali activated concrete composition and use of composition in precast concrete elements**

(30) Priority: 24.03.2011 FI 20115283
(71) Applicant: Consolis Technology Oy Ab, 01510 Vantaa (FI)
(72) Inventor: Cwirzen, Andrzej, 02280 Espoo (FI)
(74) Representative: Langenskiöld, Tord Karl Walter

(57) **Abstract**

The object of the invention is an alkali activated concrete composition comprising a binder and an alkali activator, wherein the content of blast furnace slag in the binder is 48-54 wt -% and the binder comprises a combination of fly ash and blast furnace slag in the ratio 0.4 - 1.0 by weight. The invention also describes the use of alkali activated concrete in precast concrete elements.

## Description

### Field of the invention

The invention relates to the field of concrete compositions. Particularly, the invention concerns an alkali activated concrete composition and use of this composition in precast concrete elements.

### Background of the invention

Alkali activated concrete, also called geopolymer concrete, comprises binders like blast furnace slag, fly ash, metakaolin and in some cases also Portland cement, which can be combined in different proportions. A chemical activator is added during mixing to promote the solidification process. Alkali activators in conventional use are alkaline compounds like carbonates, hydroxides and silicates, which can be added in liquid or in dry form.

One of the most common problems relating to alkali activated concrete containing blast furnace slag, is rapid setting and loss of workability. It is especially pronounced when using sodium silicate and even more when a small amount of Portland cement is present.

When fly ash is used, the setting is not too rapid but a large amount of energy needs to be provided in order to initiate the polymerization process. This process requires use of a curing temperature over 80 °C. However, in most precast concrete plants the usual maximum temperature which can be obtained is between 50 - 60 °C. When using temperatures below 60 °C, the fly ash polymerization process would cause very low compressive strength values.

In order to successfully produce hollow core slabs, the open time should be at least 30 minutes, counting from the end of the mixing. During the open time, hardening should not occur and only minor changes in workability are allowed. Due to the use of special casting machines such as extruders and slipformers, the concrete must be ground wet or moist limiting the use of different materials and the maximum amount of mixing water. Concrete types for slipforming and extrusion are mostly used in prestressed elements which require above 30 MPa compressive strength measured 12-24 hours after casting.

CA 1258269 discloses a cementitious binder for consolidated fill. A hardened mass composed of aggregate is bound together with cementitious paste providing a relative low 28-day compressive strength and hence is well adapted for use for non-structural purposes e.g. back fill in mine excavations and conduit pipe surround. The binder consists of an iron blast furnace slag, a fly ash and an alkaline activator. Because the 28-day strength of the binder is very low, it is not suitable for use in extrusion or slipforming, which require high compressive strength values for cutting press stressing strands and demoulding. On the other hand, setting of the binder is very fast resulting in too short open time for extrusion and slipforming.

International publication WO 2007109862 discloses a dry mix cement composition including an alkaline multi-phase aluminosilicate material which is formed by activating an aluminosilicate material in the presence of alkali material. Used cement composition does not give a sufficient open time for slipforming and extrusion.

The object of the present invention is to provide an alkali activated concrete composition, which overcomes the above mentioned drawbacks.

### Summary of the invention

The aim of the invention is to ensure an open time of at least 30 minutes with workability adequate for extruders and slipformers. Furthermore, sufficient mechanical properties are ensured even at curing temperatures as low as 50 °C. This is achieved by proportioning of the concrete mix, especially specific combination of blast furnace slag, fly ash and chemical activators. Also the CO₂ emission in comparison with normal concretes is reduced up to 80 % by reducing the use of Portland cement.

According to one aspect of the invention there is provided an alkali activated concrete composition, comprising a binder and an alkali activator, wherein the content of blast furnace slag in the binder is 48-54 wt -% and the binder comprises a combination of fly ash and blast furnace slag in the ratio 0.4 - 1.0 by weight. According to a preferred embodiment, the content of blast furnace slag in the binder is 48-54 wt -% and the binder comprises a combination of fly ash and blast furnace slag in the ratio 0.4 - 0.8 by weight. According to another preferred embodiment, the content of blast furnace slag in the binder is 49-52 wt -% and the binder comprises a combination of fly ash and blast furnace slag in the ratio 0.4 - 0.8 by weight. Preferably, the content of blast furnace slag in the binder is 48-54 wt -% and the binder comprise a combination of fly ash and blast furnace slag in the ratio 0.6 - 0.8 by weight. Preferably the content of blast furnace slag in the binder is 49-52 wt.

The binder can further comprise Portland cement, the content of which is up to 20 wt-% of the total weight of the binder.

The alkali activator comprises sodium silicate, sodium carbonate or potassium carbonate or any combination of these. Preferably, the alkali activated concrete composition comprises at least one of the following in the indicated amounts: 0-10 wt -% of sodium silicate, 4-10 wt - % of sodium carbonate and 4-15 wt % of potassium carbonate wherein the weight percentages being relative to the binder excluding Portland cement. Sodium silicate has modulus 1.5-2, preferable modulus 2. Sodium silicate can be anhydrous or it can be added as an aqueous solution.

In a further aspect of the invention there is provided the use of alkali activated concrete in precast concrete elements, wherein the precast concrete element is made by extrusion, by slip forming or casting in-situ. The precast concrete element can also be heat treated after the cast. The alkali activated concrete can be vibrated concrete, no-slump concrete or self compacting concrete (SCC).

### Brief description of the figures

The invention and its details will be described in more detail in the following, with reference to the enclosed drawings, wherein
Fig. 1a shows the effect of the amount of blast furnace slag on drying of alkali activated concrete,
Fig. 1b shows the effect of blast furnace slag amount on 1-day compressive strength results,
Fig. 2 shows an effect of addition of liquid (aqueous) sodium silicate and dry sodium silicate on workability loss,
Fig. 3 shows an effect of sodium silica modulus and slag content on drying of concretes, and
Fig. 4 shows the effect of curing temperature on 1 day compressive strength.

### Detailed description of the invention

According to the invention an alkali activated concrete composition comprises a binder and an alkali activator, wherein the content of blast furnace slag in the binder is 48-54 wt -% and the binder comprises a combination of fly ash and blast furnace slag in the ratio 0.4 - 1.0 by weight. This combination provides an unexpected effect of better workability and at the same time lowers the required curing temperature to 50 °C. According to a preferred embodiment, the content of blast furnace slag in the binder is 48-54 wt -% and the binder comprises a combination of fly ash and blast furnace slag in the ratio 0.4 - 0.8 by weight. According to another preferred embodiment, the content of blast furnace slag in the binder is 49-52 wt -% and the binder comprises a combination of fly ash and blast furnace slag in a ratio of 0.4 - 0.8 by weight. More preferably, the binder comprises a combination of fly ash and blast furnace slag in the ratio 0.4 - 0.8 by weight, most preferably in the ratio 0.6 - 0.8 by weight. More preferably, the blast furnace slag content is 49-52 wt -% of the total binder. Most preferably the blast furnace slag content is 50 wt -% of the total binder.

The alkali activated concrete comprises normally binders like blast furnace slag, fly ash, metakaolin and in some cases also Portland cement, which binders can be combined in different proportions. The alkali activated binders are based on chemical activation of raw materials which are not very reactive when mixed alone with water.

Portland cement is manufactured by sintering raw materials, primary limestone, at 1450 °C. For each ton of ordinary Portland cement based concrete created, approximately one ton of greenhouse gas is added to the atmosphere. This greenhouse gas is due to the fuel composition when heating the raw materials to high temperatures as well as to chemical changes that take place during this heating e.g. decarbonation of limestone. When Portland cement is replaced with other earlier described materials in the binder, the CO₂ emission is reduced up to 80 % when compared to normal concretes. Reduction of the CO₂ emission is also achieved when only very small amounts of Portland cement is used as binder.

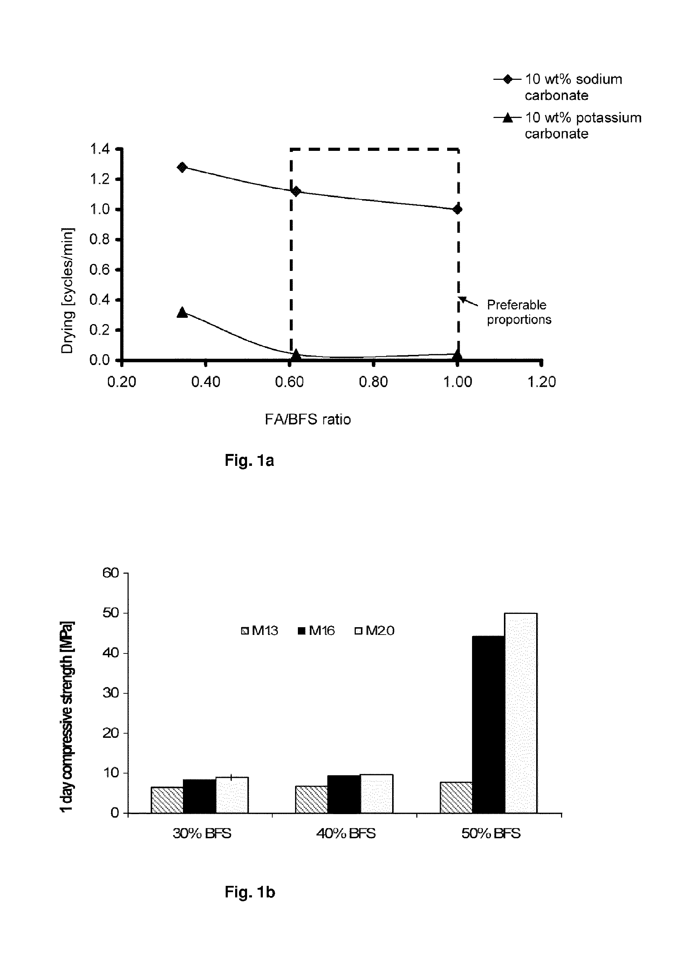

Fig. 1a shows the effect of the amount of blast furnace slag on drying of alkali activated concrete. All mixes contain also fly ash and 15 wt-% of Portland cement. All mixes were activated by a mixture of 7 wt- % of sodium silicate and 10 wt- % of either sodium carbonate or potassium carbonate. The solidification (drying) is expressed as an increasing number of ICT (Intensive Compaction Tester) cycles per minute. An increasing number relates to a more rapid loss of workability. The number of cycles should be well below 1.0, measured within at least 25 minutes. The maximum number of cycles varies and depends on the type of casting machine. The preferable amount of fly ash and blast furnace slag is a result of acceptable drying speed and the obtained compressive strength. As shown in Figure 1b, a significant increase of 1-day compressive strength has been observed when the amount of blast furnace slag was 50 %. In Figure 1b, a mixture comprising 12-wt % of aqueous sodium silicate and 10 wt-% of sodium carbonate was used as an activator. Figure 1b also shows how modulus of sodium silicate affects to the compressive strength values. Modulus values of sodium silicate were 1.3, 1.6 and 2.0.

If Portland cement is used, the preferable content is up to 20 of total weight of binder, more preferably the Portland cement content is up to 14 wt-%, most preferably the Portland cement content is up to 5 wt-%.

The chemical activation which leads to the decomposition of the raw materials can be initiated by changing the pH of the solution to the level of at least 12. This can be done by incorporation of alkaline compounds e.g. carbonates, hydroxides or silicates into the water solution alone or by combination. The most common chemical activators are sodium silicate, sodium and potassium carbonates, and sodium hydroxide. Other activators such as calcium oxide and lime are also used.

Alkali activators can be incorporated as an aqueous solution or dry powder (anhydrous solution) or as a combination of both. Amount of activators are calculated as dry content. Aqueous activator can be obtained as a ready product or by mixing water with dry activator, in that case included water in the water glass is excluded from added water. When using only dry materials, like anhydrous sodium silicate and carbonate, the solidification reaction is delayed and the open time increases. Use of only dry components and especially of dry sodium silicate results in a significant decrease of drying comparing to mixes where activators have initially been dissolved in water. The effect appears especially after approximately 15 minutes from mixing. This does not affect the mechanical compressive strength properties measured after 1 day or after 28 days. The indisputable advantage of this solution is also increased capacity to accept aggregates containing large amount of moisture. Furthermore, the handling of dry materials appears to be easier in factory conditions than the handling of liquids.

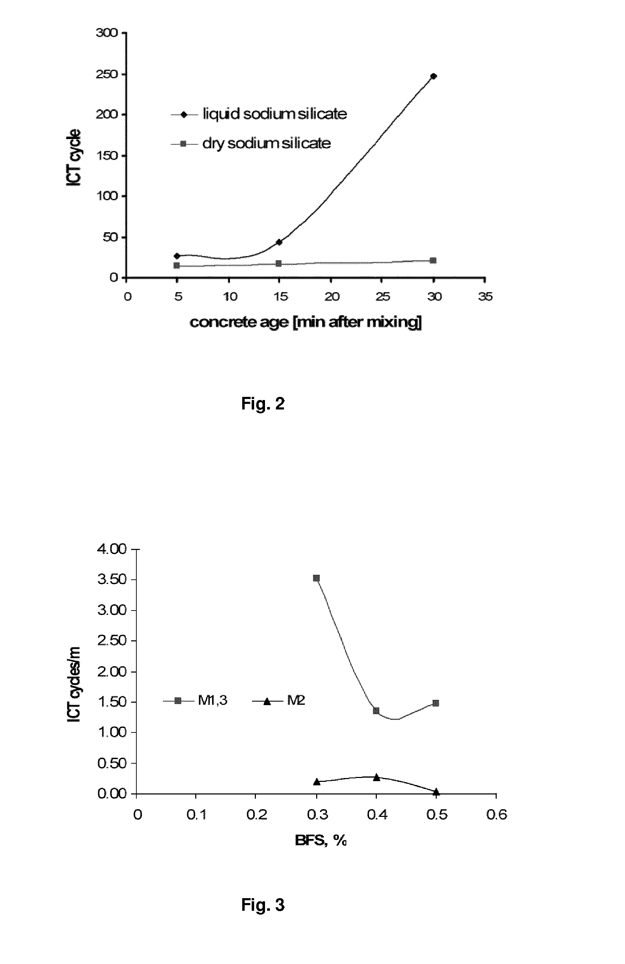

Fig. 2 shows effects on the workability loss when aqueous sodium silicate or dry sodium silicate is added. The ICT cycles denotes the number of cycles required to compact a concrete sample to the target density value. Compaction is done using a commercially available ICT tester.

Using sodium silicate as alkali activator provides the highest strength. Unfortunately, rapid setting of concrete produced with this activator is common. This problem was also encountered in the 70's when tests were made in Finland. The test results also showed that the presence of Portland cement tended to increase the drying speed and caused loss of workability.

The solution according to the invention can be additionally enhanced by adjusting the modulus of sodium silicate, combining this compound in certain proportions with carbonates and/or using dry sodium silicate. This solution helps to reduce rapid setting. The modulus of sodium silicate is defined as SiO2/Na2O ratio. The preferable modulus is 1.5-2.0, which ensures unchanged workability and no setting within the measured 30 minutes, starting from casting, for slag amounts of 48-54 wt-%. More preferably, the modulus of sodium silicate is 2.

Fig. 3 shows the effect of sodium silica modulus and slag content on the drying of concretes. No Portland cement is present in these mixes. The mixes contained aqueous sodium silicate providing solids content of 7 wt-%, and 10 wt-% of sodium carbonate.

Preferable amounts of sodium silicate and alkali carbonates as alkali activators are: 0-10 wt-% of sodium silicate, 4-10 wt- % of sodium carbonate, or 4-15 wt-% of potassium carbonate or their combinations. More preferably, the alkali activated concrete composition comprises at least one of the following in the indicated amounts: 0-10 wt -% of sodium silicate, 7-10 wt -% of sodium carbonate and 7-15 wt % of potassium carbonate wherein the weight percentages being relative to the binder excluding Portland cement. More preferably, the amount of sodium silicate is 0-7 wt-%. All amounts are given as wt -% of the total binder without Portland cement, relative to the weight of the binder.

The concrete material comprises coarse aggregates, sand, optional fillers, water, chemical activator and binder. Coarse aggregates usually have a diameter above 2 mm. Optional fillers are fine materials with diameters less than the sand particles and in some cases less than the cement particles in the mix. Aggregates and fillers are not reactive under normal conditions and mainly improve the packing density. The ratio of binder in relation to the whole concrete amount affects the mechanical properties as well as the workability, e.g. in self compacting concrete more fine particles, including cement and fillers, can be used to improve the workability. Also the amount of activator in relation to binder has an effect on the cement because too small amounts will cause inferior mechanical properties both at an early stage and after complete solidification. Too high amounts will cause e.g. rapid setting, fast loss of workability and possible durability problems.

The mixing procedure starts with the mixing of dry aggregates, binders, possibly also some or all chemical activators. This mixing is followed by the addition of water optionally containing all or part of the chemical activators. The total mixing time is similar to that of regular concrete. The alkali activated concrete can be vibrated concrete, no-slump concrete, self compacting concrete, moist concrete, ground wet concrete or any other concrete which can be made according to this invention. These concretes can be used in precast concrete elements made by extrusion, by slip forming, by cast in-situ or by any other suitable method. All the developed concretes can be handled in a regular manner.

After casting the elements can be covered and subjected to heat treatment. Heat treatment is not mandatory. In order to produce concrete elements in regular plants not equipped with autoclaving equipment, the required temperature should not exceed 60°C.

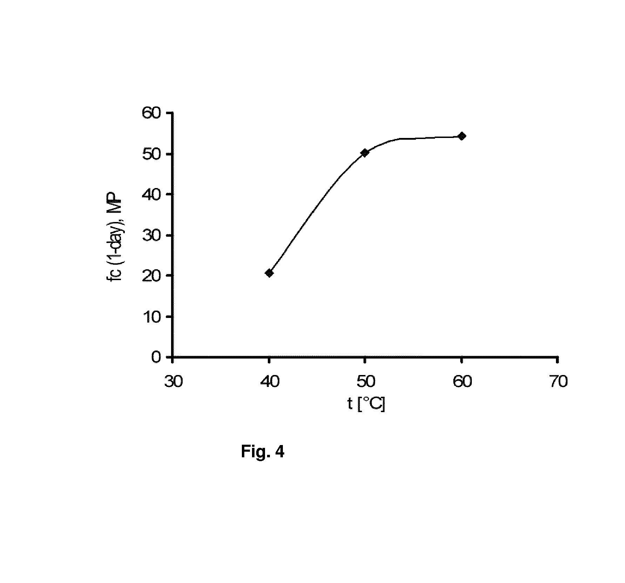

Figure 4 shows an example of a mix without Portland cement, revealing a very minor strength increase after the temperature has exceeded 50 °C, still obtaining a high 1 day strength, above 50 MPa. The obtained affect is due to the presence of blast furnace slag which presumable initiates polymerization reactions of fly ash. The shown mix was activated by alkali activator composed from 7 wt % aqueous sodium silicate (modulus 2.0) and 10 wt % of sodium carbonate. Both compounds are calculated as wt-% of the total binder content. Binders were composed of 50 wt-% of fly ash and 50 wt-% of blast furnace slag. The duration of the heat treatment can vary from a few hours to one day, depending on the required early strength values. The ratio of weight of fly ash and weight of blast furnace slag in this example is 50 wt-%/50 wt-% = 1.

### Examples

The alkali activated concrete composition will now be illustrated with reference to the following examples. These examples are provided for illustration only and should not be considered limiting the invention in any way.

### Example 1

Mix for a slipforming machine to produce hollow core slabs. Binder composition: 50 wt-% blast furnace slag, 36 wt-% fly ash, 14 wt-% Portland cement. Alkali activators are added dry and have the following composition: 7wt-% of sodium carbonate, 7wt-% of dry sodium silicate (modulus 2.0), counted as wt-% of total binder excluding Portland cement. The water content is 130-140 kg/m³, total content of coarse aggregates 1880 kg/m³. The required time of workability is more than 30 minutes, calculated from the end of the mixing. The concrete is heat treated after casting at a temperature of at least 50 °C. The obtained 24 hour compressive strength is over 35MPa and the 28-day compressive strength exceeds 50 MPa. The ratio of fly ash and blast furnace slag by weight in this example is 36 wt-%/50 wt-% = 0,72.

The advantage of this mix composition in comparison with previously cast hollow core slab concrete is a long open time, at least 30 minutes, which previously was in many cases less than 10 minutes. Removal of the elements from the formworks is done without problems, comparing to trials in the 70s and 80s, when the slab tended to be "glued" to beds. However, the biggest advantage of this mix is a reduction of CO₂ emission by approximately 70 % in comparison with concrete produced using 100 % of Portland cement. The price is increased by approximately 12 %. The mix also fulfils requirements for CEMIIIB.

### Example 2

Mix for a slipforming machine to produce hollow core slabs. Binder composition: 50 wt-% blast furnace slag, 36 wt-% fly ash, 14 wt-% Portland cement. Alkali activators are added dry and have the following composition: 7wt-% of potassium carbonate, 7wt-% of dry sodium silicate (modulus 2.0), counted as wt-% of total binder excluding Portland cement. The water content is 130-140 kg/m³, total content of coarse aggregates 1880 kg/m³. The required time of workability is more than 30 minutes, calculated from the end of the mixing. The concrete is heat treated after casting at a temperature of at least 50 °C. The obtained 24 hours compressive strength is over 35MPa and 28-day compressive strength exceeds 50 MPa.

The advantage of this mix composition in comparison with previously cast hollow core slab concrete is long open time, at least 30 minutes, which previously was in many cases less than 10 minutes. However, the biggest advantage of this mix is a reduction of CO₂ emission by around 78 % in comparison with concrete produced using 100 % of Portland cement. Unfortunately, the price is increased by approximately 30 % due to the use of expensive potassium carbonate. The mix also fulfils the requirements for CEMIIIB.

### Example 3

Mix for a slipforming machine to produce hollow core slabs. Binder composition: 50 wt-% blast furnace slag, 46 wt-% fly ash, 14 wt-% Portland cement. Alkali activators are added dry and have the following composition: 7wt-% of potassium carbonate, 7wt-% of dry sodium silicate (modulus 2.0), counted as wt-% of total binder excluding Portland cement. The concrete is heat treated after casting at a temperature of at least 50 °C. The obtained 24 hours compressive strength is over 35MPa and 28-day compressive strength exceeds 50 MPa. The advantage of this mix composition is a long open time, at least 30 minutes, and reduction of CO₂ emission.

The sodium silicate type used in Examples 1-3 is e.g. Britesil H20 manufactured by PQ Chemicals. The Portland cement used in these examples is e.g. CEMI type.

## Claims

1. An alkali activated concrete composition, comprising a binder and an alkali activator, **characterized in that** the content of blast furnace slag in the binder is 48-54 wt -% and the binder comprises a combination of fly ash and blast furnace slag in the ratio 0.4-1.0 by weight.

2. An alkali activated concrete composition according to claim 1, wherein the binder comprises a combination of fly ash and blast furnace slag in the ratio 0.4- 0.8 by weight.

3. An alkali activated concrete composition according to claim 1, wherein the binder comprises a combination of fly ash and blast furnace slag in the ratio 0.6 - 0.8 by weight.

4. An alkali activated concrete composition according to any of the preceding claims, wherein the alkali activator comprises sodium silicate, sodium carbonate, potassium carbonate or any combination of these.

5. An alkali activated concrete composition according to any of the preceding claims, wherein the alkali activator comprises at least one of the following in the indicated amounts:
- 0-10 wt -% of sodium silicate,
- 4-10 wt -% of sodium carbonate and
- 4-15 wt % of potassium carbonate the weight percentages being relative to the binder excluding Portland cement.

6. An alkali activated concrete composition according to claim 4 or 5, wherein the sodium silicate has modulus 1.5-2.

7. An alkali activated concrete composition according to claim 4 or 5, wherein the sodium silicate has modulus 2.

8. An alkali activated concrete composition according to any of claims 4 to 7, wherein the sodium silicate is anhydrous.

9. An alkali activated concrete composition according to any of claims 4 to 7, wherein the sodium silicate has been added as an aqueous solution.

10. An alkali activated concrete composition according to any of the preceding claims, wherein the content of blast furnace slag in the binder is 49-52 wt -%.

11. An alkali activated concrete composition according to any of the preceding claims, wherein the binder further comprises Portland cement, the content of which is up to 20 wt- % of the total weight of the binder.

12. Use of alkali activated concrete according to any of the preceding claims in precast concrete elements.

13. Use of alkali activated concrete according to claim 12, wherein the alkali activated concrete is vibrated concrete, no-slump concrete or self compacting concrete.

14. Use of alkali activated concrete according to claim 12 or 13, wherein the precast concrete element is made by extrusion, by slip forming or casting in-situ.

15. Use of alkali activated concrete according to any of claims 11 to 14, wherein the precast concrete element is heat treated after casting.
